# EUROPEAN PATENT SPECIFICATION

(11) **EP 4 516 671 B1**
(45) Date of publication and mention of the grant of the patent: **12.08.2026**
(21) Application number: 23194548.6
(22) Date of filing: 31.08.2023
(51) Int. Cl.: B64D 9/00, B64D 11/00, B64F 1/36, B64C 1/22, B64C 39/10

(54) **ONBOARD STOWAGE OF HAND LUGGAGE**
ONBOARD-GEPÄCKABLAGE VON HANDGEPÄCK
RANGEMENT EMBARQUÉ DE BAGAGES À MAIN

(43) Date of publication of application: 05.03.2025
(73) Proprietor: Airbus Operations GmbH, 21129 Hamburg (DE)
(72) Inventor: Friedel, Andreas, 21129 Hamburg (DE); Bachmann, Thomas, 21129 Hamburg (DE); Benthien, Hermann, 21129 Hamburg (DE)
(74) Representative: Airbus Germany

(56) References cited:
- EP-B1- 3 112 255
- US-A1- 2006 022 090
- US-A1- 2013 168 500
- US-A1- 2018 334 254
- US-B2- 10 167 081

## Description

### FIELD OF THE INVENTION

The present invention relates to a system for onboard stowage of hand luggage, to an aircraft and to a method for handling hand luggage stowage onboard a vehicle.

### BACKGROUND OF THE INVENTION

In addition to checked-in luggage that is stored in a cargo area of an aircraft, passengers may also be allowed to carry luggage onboard an aircraft. This luggage is called onboard luggage, carry-on items or hand luggage. This luggage may be handbags, shopping bags, or other kind of bags, rucksacks and even suitcases, which are usually limited in size. The hand luggage is either stored underneath a seat in front of the passenger during flight or, more convenient, in a luggage department like overhead bins. Even though overhead bins are located above the assigned seats, it has been shown that placing the hand luggage in the overhead bins may lead to situations where a continuous boarding of further passengers may be interfered or even obstructed, interrupting and thus protracting the onboarding procedure.

US 2006/022090 A1, according to its abstract, describes a carry-on luggage system for an airport includes a carry-on interface station. A carry-on transport module is disposed and accessible within the carry-on interface station and includes multiple stowage units for carry-on items. A transport mechanism transports the carry-on transport module between the airport interface terminal and an aircraft. A method of loading and unloading carry-on items on and off an aircraft includes providing access to a stowage unit. The stowage unit is on a carry-on transport module at a carry-on interface station. Access to the stowage unit allows for placement of at least one carry-on item therein. The carry-on transport module is transported between the carry-on interface station and an aircraft.

EP 3112255 B1, according to the abstract of the application publication, describes a stowage carousel for handling cargo aboard an aircraft. The stowage carousel includes a revolving conveyor having an inner ring facing a passenger cabin of the aircraft and an outer ring facing a fuselage of the aircraft. Stowage compartments are associated with the revolving conveyor. The stowage compartments are configured to receive the cargo. The stowage compartments are rotatable within the aircraft with the revolving conveyor. The revolving conveyor is situated within the aircraft partially in the passenger cabin and partially in at least one of an upper crown and a lower lobe (108) of the aircraft.

US 2013/168500 A1, according to its abstract, describes a lift for an aircraft. This is used to store freight items and/or transport these between a cargo hold and a passenger cabin. The lift comprises at least one receiver compartment, in particular a lift cabin, to receive a freight item, in particular a suitcase and/or a bag; at least one first opening and at least one second opening for loading and/or unloading the lift, wherein the first opening opens into a passenger cabin and the second opening into a cargo hold; and at least one guide ring in relation to which the receiver compartment is arranged mobile such that the receiver compartment is displaceable along the guide ring in a rotation movement about a rotation axis.

### SUMMARY OF THE INVENTION

There may thus be a need to provide alternative hand luggage stowing concepts.

The object of the present invention is solved by the subject-matter of the independent claims; further embodiments are incorporated in the dependent claims. It should be noted that the following described aspects of the invention apply also for the system for onboard stowage of hand luggage, for the aircraft and for the method for handling hand luggage stowage onboard a vehicle.

According to the present invention, a system for onboard stowage of hand luggage is provided. The system comprises a plurality of stowage compartments movably arranged in a stowage area. The system also comprises a driving arrangement for moving the plurality of stowage compartments inside the stowage area. The system further comprises at least one access point adjacent to the stowage area. The stowage compartments are configured to receive onboard hand luggage. The stowage compartments are releasably connected to the driving arrangement. The access point is configured to be arranged in an aircraft cabin to receive a selected one of the stowage compartments in order to provide access to the stowage compartment via an access opening such that a user can load or unload the respective stowage compartment from a cabin space inside an aircraft.

As an effect, the stowage of hand luggage by the passengers and their moving along the cabin to the passenger seats can be separated. The stowing procedure of hand luggage is thus provided in a more organized and therefore facilitated manner. A further advantage is that the available size for stowage of hand luggage is no longer restricted by the available size in compartments above the passenger seats. Since the stowage compartments can be located independent of the location of the passenger seats, more, and of course also less, size can be provided, depending on the operator's needs. As a further advantage, by being able to store the luggage hidden in a separate stowage area, safety is increased regarding not properly locked or overloaded stowage bins.

As a further advantage, the present inventive concept is in particular suitable for so-called flying wing type aircrafts (German: *"Nurfliigler"*) or other aircrafts with a limited fuselage height. Or also for using space within the aircraft less suitable for seating purposes.

The present inventive concept is also suitable for providing an enlarged hand luggage volume. An area of such application are in particular short and medium distance flights where passengers have been shown to prefer to carry only hand luggage which in turn might be larger in volume.

According to the invention, the stowage area is at least partly enclosed such that access by passengers is restricted to the at least one access point.

According to another example, the stowage compartments are provided as individual bins with a closable opening to load or unload hand luggage.

According to the invention, the driving arrangement comprises a circulating transport device to which the stowage compartments are releasably connected.

According to the invention, the circulating transport device is arranged within a horizontal plane.

According to an example, the driving arrangement is configured to follow an available stowage space within an aircraft fuselage. The available stowage space is located in lateral cabin areas that are non-suitable for passenger seating.

According to an example, the transport device comprises connecting devices to releasably hold the stowage compartments. The connecting devices are mounted to the transport device in a regular pattern.

According to an example, the access point is provided next to the driving arrangement. The access point comprises a loading area to receive the selected stowage compartment from the transport device such that the transport device can continue to move the further stowage compartments remaining releasably connected to the driving arrangement. The stowage compartment that is temporarily arranged in the loading area is accessible by a user via the access opening.

According to an example, access to the onboard luggage by passengers during flight is provided via the at least one access point.

According to an example, the access opening of the at least one access point comprises a movable closure element that is lockable in a closed position in an emergency case.

According to an example, a scanning unit is provided at the access point to register luggage entered into the opening of the access point to a respective user and to monitor loaded and unloaded luggage.

According to an example, a guidance rail is provided that keeps the stowage compartments in a consistent orientation during movement by the driving arrangement.

According to an example, the stowage area further comprises a loading opening. At least a part of the stowage compartments are couplable with each other to form a stowage chain. The loading opening is configured to guide at least a part of the stowage chain to a loading point located outside the cabin space for loading and unloading of hand luggage into the stowage compartments before and/or after a flight mission.

According to the present invention, also an aircraft is provided that comprises a fuselage, a cabin area within the fuselage and at least one system for onboard stowage of hand luggage according to one of the preceding examples. The at least one system for onboard stowage of hand luggage serves as stowage capacity for passengers seated within the cabin area. At least one access point is accessible by passengers from the cabin space.

According to the present invention, also a method for handling hand luggage stowage onboard a vehicle is provided. The method is according to claim 12.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a system for onboard stowage of hand luggage.
Fig. 2 shows an example of a stowage compartment of the system of Fig. 1 in relation to a transport device of the system.
Fig. 3 shows an example of a connecting device for releasably holding the stowage compartment of Fig. 2.
Fig. 4 shows an example of a guidance rail of the system of Fig. 1 which rail keeps the stowage compartments in a consistent orientation during movement by the driving arrangement.
Fig. 5 shows an example of an aircraft with a system for onboard stowage of hand luggage of Fig. 1.
Fig. 6 shows an example of the system of Fig. 1 with a loading opening to guide at least a part of the stowage compartments coupled to a stowage chain to a loading point located outside the cabin space for loading and unloading of hand luggage into the stowage compartments before and/or after a flight mission.
Fig. 7 shows basic steps of an example of a method for handling hand luggage stowage onboard a vehicle.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of", when preceding a list of elements, modify the entire list of elements and do not modify the individual elements of the list.

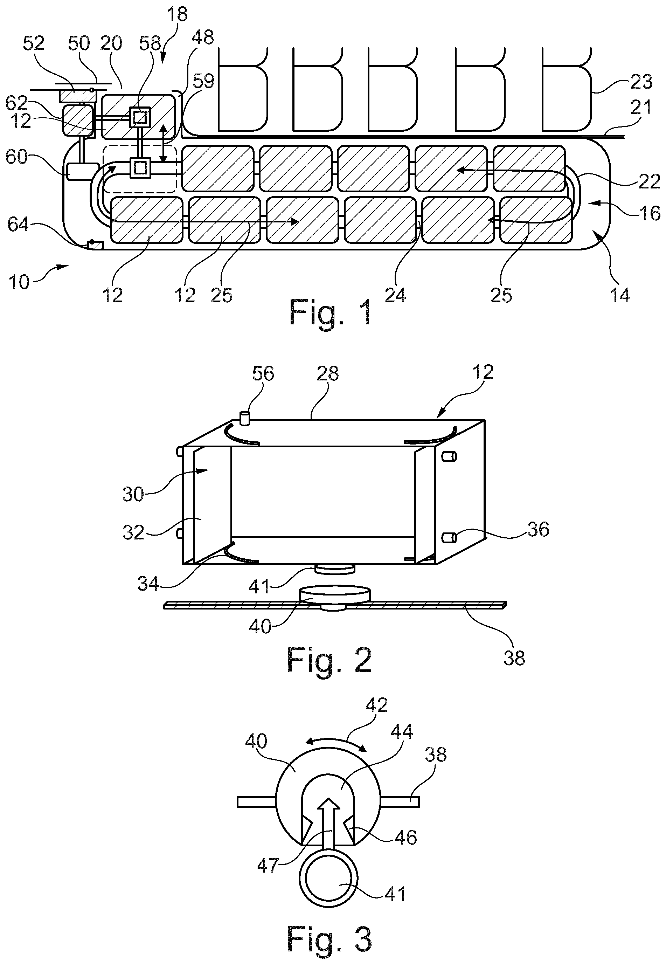

Fig. 1 schematically shows an example of a system 10 for onboard stowage of hand luggage. The system 10 comprises a plurality of stowage compartments 12 movably arranged in a stowage area 14. The system 10 further comprises a driving arrangement 16 for moving the plurality of stowage compartments 12 inside the stowage area 14. The system 10 also comprises at least one access point 18 adjacent to the stowage area 14. The stowage compartments 12 are configured to receive onboard hand luggage. The stowage compartments 12 are releasably connected to the driving arrangement 16. The access point 18 is configured to be arranged in an aircraft cabin to receive a selected one of the stowage compartments 12 in order to provide access to the stowage compartment 12 via an access opening 20 such that a user can load or unload the respective stowage compartment 12 from a cabin space inside an aircraft.

The term "hand luggage" relates to all carried-on items, i.e. items that passengers are taking with them when onboarding or embarking the aircraft. The term "stowage compartment" relates to container-like volumes designed to receive luggage, e.g. passenger luggage like bags, suitcases, rucksacks, trolley and clothing, during operation of the aircraft. The term "stowage area" relates to a space within the fuselage designated to act as space for storing the hand luggage during flight. The term "driving arrangement" relates to a mechanism configured to move the stowage compartments 12 within the stowage area 14. The term "access point" relates to a location where the user, e.g. a passenger, is given access to the stowed onboard luggage. The term "releasably connected" relates to a mount that can be released in order to disconnect the respective stowage compartment 12 from the driving mechanism 16. The term "access opening" relates to the opening through which the user can reach the hand luggage stowed in one of the stowage compartments 12.

In an example, the stowage area 14 is enclosed by a stowage housing. In a further example, the stowage area 14 is separated from cabin by a cabin lining. In another example, the stowage area 14 is confined by other cabin structure like monuments housing lavatories or galley sections.

In an option, two of the access points 18 are provided. In an example, the two access points 18 are provided next to each other. In another example, the two access points 18 are provided displaced to each other. In another option, three or more of the access points 18 are provided, such as four, five or six or even more.

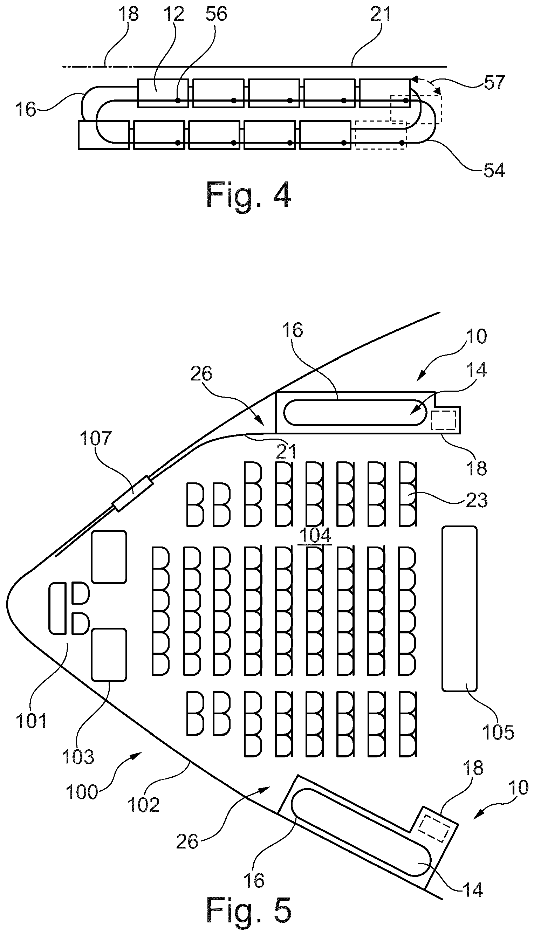

The stowage area 14 is at least partly enclosed (see also Fig. 5) such that access by passengers is restricted to the at least one access point 18.

The term "restricted" relates to the fact that other access is not provided, contrary to overhead bins that allow access throughout to the complete stowage volume of the bins. Hence, as for the present solution, the access by passengers is given only by the at least one access point 18.

For example, the stowage area 14 is completely enclosed behind an inner cabin lining 21. Only the access point 18 is provided within the cabin lining. In Fig. 1, passenger seats 23 are shown indicating an adjacent cabin space.

The driving arrangement 16 comprises a transport device 22 to which the stowage compartments 12 are releasably connected.

As shown in Fig. 1, the driving arrangement 16 comprises a circulating transport device 24 to which the stowage compartments 12 are releasably connected. Double arrows 25 indicate possible movements of the circulating transport device 24 in both directions.

The term "circulating transport device" relates to a loop-like transport of the stowage compartments 12 in order to be able to move the selected one of the stowage compartments 12 near the access point 18 to release the stowage compartment 12 and to move it within the access point 18. The circulating transport device 24 may be an elongated loop with two turning points.

In an example, the driving arrangement 16 is provided as a paternoster-type of arrangement. However, contrary to paternoster elevators, the paternoster of the system 10 for onboard stowage of hand luggage is arranged with its longitudinal extension in a horizontal direction.

In one version, the paternoster turning points, formed along a U-turn trajectory are provided in a horizontal orientation.

In another version, provided only for a better technical understanding, the paternoster turning points, formed along a U-turn trajectory are provided in a vertical orientation.

For example, the transport device 22 is provided as a chain, belt or conveyor band.

The transport device 22, e.g. the circulating transport device 24 is arranged within a horizontal plane.

In another version that does not fall within the scope of the claims, provided only for a better technical understanding, the transport device 22, e.g. the circulating transport device 24 is arranged within a vertical plane.

The terms "horizontal" or "vertical" relate to an arrangement of the vehicle in a more or less horizontal manner. During operation of the vehicle, e.g. an aircraft, train or coach, also other spatial arrangements of the vehicle may be provided temporarily.

In another version that does not fall within the scope of the claims, the circulating transport device 24 is arranged along a trajectory that is extending in a vertical plane and a horizontal plane.

In a further version, the circulating transport device 24 is arranged following an inner contour of an available stowage space inside a fuselage of an aircraft.

In an option, indicated in Fig. 5, the stowage area 14, and thus the driving arrangement 16, is configured to follow an available stowage space within an aircraft fuselage. The available stowage space is located in lateral cabin areas 26 that are non-suitable for passenger seating.

The term "follow an available stowage space" relates to a space that is more or less defined by the space non-occupied by other purposes but designated for receiving stowed items.

In an example, the circulating transport device 24 is arranged in a straight linear manner. In another example, the circulating transport device 24 is arranged in a curved manner following a contour of the fuselage.

In an example, the available stowage space is arranged lateral of the passenger seats, i.e. on the side of the passenger seats and more or less on the same height.

Fig. 2 shows an example of a stowage compartment 12 of Fig. 1 in relation to the driving arrangement 16.

Shown as an option in Fig. 2, the stowage compartments 12 may be provided as individual bins 28 with a closable opening 30 to load or unload hand luggage.

The term "individual bins" relates to separate boxes or housings or containers that act as the stowage compartment 12. They can be attached, de-attached and handled individually, e.g. when arranged in the access point 18.

In an example, the stowage compartments 12 are having an inner usable volume that matches/conforms/correlates with an allowable maximum hand luggage size per piece. In another example, the stowage compartments 12 are having an inner usable volume that matches the double or triple amount of space of an allowable maximum hand luggage size.

In Fig. 2, the closable opening 30 is shown as comprising two bin doors 32 that can be retracted along a circular pathway given by door guiding rails 34 inside the box. The bin doors may be closed with a spring and are opened mechanically when the bin is pushed into the access point 18. Further, pickup hooks 36 may be provided for a shuttle belt or picker arm at the access point 18.

The transport device 22 may comprise a belt 38, or e.g. stiff rods.

Shown as an option in Fig. 2 and Fig. 3, the transport device 22 may comprise connecting devices 40 to releasably hold the stowage compartments 12. The connecting devices 40 are mounted to the transport device 22 in a regular pattern. (Fig. 3 shows only one of the connecting devices 40.)

The term "connecting devices" relates to a sort of coupling or attachment for connecting the stowage compartments 12 to the transport device 22, which can be provided as a belt or chain or the like. In an option, the connecting devices are fixedly attached to the transport device 22 and are releasably connectable to the stowage compartments 12. In another option, the connecting devices are fixedly attached to the stowage compartments 12 and are releasably connectable to the transport device 22. In the latter case, markers are provided to ensure a steady predetermined distance of the stowage compartments 12 when coupled to the transport device 22

The connecting devices 40 are releasably interacting with counterparts 41 on the stowage compartments 12. The connecting devices 40 allow rotation, as indicated by double arrow 42 in Fig. 3. A receiving opening 44 with two movable locking clamps 46 or other form of internal locking mechanism is provided for insertion of a protruding insert like the counterpart 41 that is attached to a lower side of the bin, i.e. the stowage compartment 12. An arrow 47 indicates an insertion direction.

Shown as an option in Fig. 1, the access point 18 can be provided next to the driving arrangement 16. The access point 18 comprises a loading area 48 to receive the selected stowage compartment 12 from the transport device 16 such that the transport device 16 can continue to move the further stowage compartments 12 remaining releasably connected to the driving arrangement 16. The stowage compartment 12 that is temporarily arranged in the loading area 48 is accessible by a user via the access opening 20.

The term "loading area" relates to a free space that is provided to receive one or more of the stowage compartments 12 for loading or unloading purposes. The terms loading/unloading also comprise the access of passengers during flight, for example when searching for something within one of the stowed items.

In an option, access to the onboard luggage in the stowage compartments 12 by passengers during flight is provided via the at least one access point 18.

The term "during flight" relates to phases of an aircraft during a flight operation mode when passengers are allowed to move along the aircraft. As an example, access can be given during cruise phases. However, access may be interrupted and thus excluded during phases with expected turbulences. As an example, access can be excluded for take-off and landing phases. As another example, access can also be excluded for taxiing phases of an aircraft. In the present context, "excluded" means that access is not given in these phases.

Shown as an option in Fig. 1, the access opening 20 of the at least one access point 18 comprises a movable closure element 50 that is lockable in a closed position in an emergency case.

The term "movable closure element" relates to a part of an enclosure or lining that can be moved in an open position in order to allow access or in a closed position in order to restrict access. The movable closure element 50 can be provided as an access door or access flap. The movable closure element 50 can be slidable or pivotable or a combination of both to provide access via the opening. In another option, the movable closure element 50 is rollable to provide access via the opening.

Shown as an option in Fig. 1, a scanning unit 52 is provided at the access point 18 to register luggage entered into an opening of the access point 18 to a respective user and to monitor loaded and unloaded luggage.

The term "scanning unit" relates to a monitoring device arranged to track movements of luggage and other items in and out of the stowage compartment 12. The scanning unit 52 may comprise an optical sensor arrangement. In another example, the scanning unit 52 may comprise an electromagnetic sensor arrangement or any other type of survey or monitoring system.

As an option, Fig. 4 shows a guidance rail 54 that keeps the stowage compartments 12 in a consistent orientation during movement by the driving arrangement 16.

The term "guidance rail" relates to an arrangement provided along a trajectory of the stowage compartments 12 when moved by the driving arrangement 16. The guidance rail 54 also allows a disconnection from the guidance rail 54 when the driving arrangement 16 is moved into the area of the access point 18.

The term "consistent orientation" relates to the stowage compartment 12 maintaining more or less the same spatial orientation during the movement by the driving arrangement 16. For example, when a trajectory makes a U-turn, the stowage compartment 12 is not turned with relation to a surrounding structure. In other words, the stowage compartment 12 does not follow the movement trajectory with its complete structure, but only with e.g. a support center. This movement scheme can also be referred to as paternoster like.

As an example, a guidance rod 56 is provided on an upper corner of the stowage compartment 12, so that the bin always keeps its direction (see also Fig. 2). At the access point 18, the guidance rod 56 is detachable. A curved double arrow 57 in Fig. 4 indicates the moving of the stowage compartment 12 at a right turning point while keeping its orientation.

In Fig. 1, a shuttle drive 58 is provided as an option to move the selected stowage compartment 12 to the access point 18, as indicated with a double arrow 59. Further, a belt drive 60 is indicated as an option to move the driving arrangement 16 like the circulating transport device 24.

In Fig. 1, also a central control unit 62 is provided as an option which control unit 62 is configured to control the movable closure element 50 at the access point 18, the shuttle drive 58 and also the belt drive 60.

As a further option, a smoke detection system 64 is provided with at least one smoke detection sensor in the stowage area 14. In another option, each luggage bin is provided with a smoke detection sensor (not shown).

Fig. 5 shows an example of an aircraft 100 comprising a fuselage 102, a cabin area 104 within the fuselage 102 and at least one example of the system 10 for onboard stowage of hand luggage according to one of the preceding and following examples. The at least one system 10 for onboard stowage of hand luggage serves as stowage capacity for passengers seated within the cabin area 104. The at least one access point 18 of the system 10 for onboard stowage of hand luggage is accessible by passengers from the cabin space, i.e. from within the cabin area 104.

The term "fuselage" relates to a body structure within which the cabin area 104 is provided. In an example (not shown), wings and other parts are connected to the fuselage 102. In another example, the fuselage 102 is provided such that it at least partly also provides wing functions. In a further example, as shown in Fig. 5, the aircraft is provided with a "flying wing" design. In an example, the aircraft 100 is provided as an aircraft with a wing-blended body.

In Fig. 5, a cockpit area 101 is indicated in a simplified manner. Further, lavatories 103 and a galley/lavatory combination 105 are also indicated. A boarding door 107 is also shown.

As can be seen by the triangular shaped fuselage, the aircraft may be provided as flying wing type aircraft.

In an option, the at least one system 10 for onboard stowage of hand luggage serves as the only stowage capacity for passengers seated within the cabin area.

For example, overhead bins are not provided. The cabin is an overhead-bin-free space.

In another option, a vehicle is provided that comprises a body structure and a cabin area within the body structure. Further, at least one system for onboard stowage of hand luggage according to one of the preceding examples is provided. The at least one system for onboard stowage of hand luggage serves as stowage capacity for passengers seated within the cabin area. In an example, the vehicle is a coach, train or ship.

In an option, a cabin layout is provided with passenger seats arranged in such a way that passengers first stow their hand luggage in a dedicated hand luggage compartment when boarding, and are seated afterwards.

In an example, passengers deposit their hand luggage in storage bins. The storage bins are then relocated in an automated way, making optimal use of the available space in the fuselage/hand luggage compartment. The passengers can access their hand luggage with handed out electronic badges, or smartphone app, etc., at dedicated access points during flight. During takeoff, landing and emergency phases, access to hand luggage is restricted by locking the access point 18, thus increasing safety.

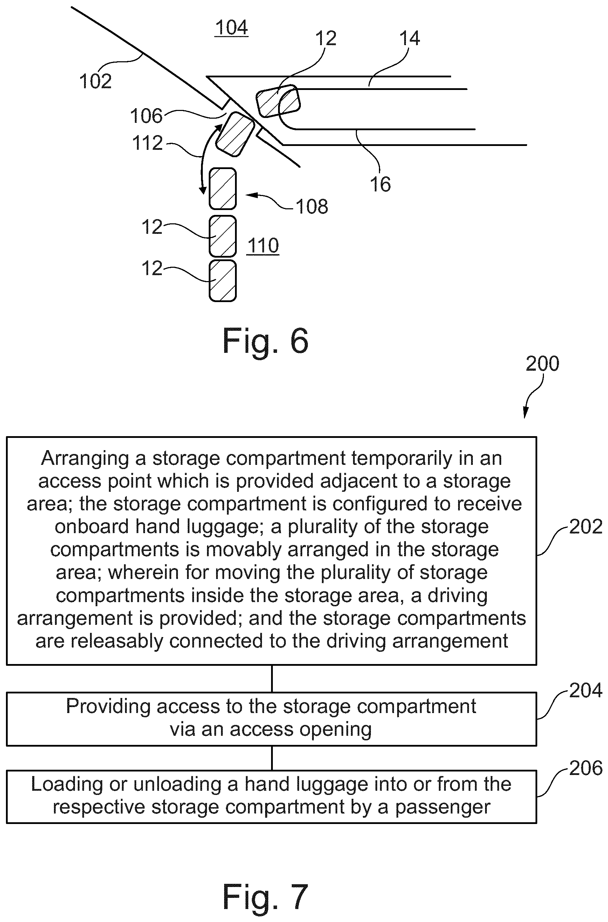

Fig. 6 shows another option of the system 10 for onboard stowage of hand luggage. As schematically depicted, the stowage area 14 further comprises a loading opening 106. At least a part of the stowage compartments 12 are couplable with each other to form a stowage chain 108. The loading opening 106 is configured to guide at least a part of the stowage chain 108 to a loading point 110 located outside the cabin space for loading and unloading of hand luggage into the stowage compartments 12 before and/or after a flight mission. A double arrow 112 indicates the inwards/outwards movement of the stowage compartments 12 when coupled forming the stowage chain 108.

In an example, the stowage compartments 12 can be decoupled from the driving arrangement 16 and derailed from a guide and can be re-coupled and put on the guide afterwards.

In an example, the driving arrangement 16 is provided with a detachable longitudinal member that couples the stowage compartments 12.

The term "loading opening" relates to an opening in the enclosure of the stowage area 14 that allows to move the stowage compartments 12 when coupled to a chain into or out of the stowage area 14. The opening is provided for loading or unloading the stowage compartments 12. The stowage compartments 12 can be stacked with hand luggage or can be empty.

The term "stowage chain" relates to a sort of chain of the connected, i.e. coupled stowage compartments 12. The stowage chain can also be referred to as stowage train, e.g. when moved along a track.

The term "loading point" relates to a location or area provided for loading and unloading the hand luggage from the stowage compartments 12.

The term "flight mission" relates to the phase of the flight including taxiing, take-off and landing. Before and after the flight mission relates to phases when the aircraft is on the ground, e.g. when in parking position at a gate or on an airfield.

In a first option, the stowage compartments 12 are provided at the loading point empty ready for loading hand luggage by the passengers before embarking the aircraft, i.e. before entering the aircraft for the flight mission. The stowage chain is then moved from the loading point into the stowage area 14 on board the aircraft. During flight, the hand luggage is only accessible via the at least one access point 18. After the flight, the stowage chain is moved from the stowage area 14 on board the aircraft to the loading point. The stowage compartments 12 can be emptied and the passengers can grab their hand luggage upon disembarking the aircraft, i.e. upon leaving the aircraft after the flight mission.

In a second option, the stowage compartments 12 are provided at the access point 18 onboard the aircraft for loading the hand luggage by the passengers after embarking the aircraft but before getting seated. During flight, the hand luggage is only accessible via the at least one access point 18. After the flight, the stowage chain is moved from the stowage area 14 on board the aircraft to the loading point. The stowage compartments 12 can be emptied and the passengers can grab their hand luggage upon disembarking the aircraft, i.e. upon leaving the aircraft after the flight mission.

In a third option, the stowage compartments 12 are provided at the loading point empty ready for loading hand luggage by the passengers before embarking the aircraft, i.e. before entering the aircraft for the flight mission. The stowage chain is then moved from the loading point into the stowage area 14 on board the aircraft. During flight, the hand luggage is only accessible via the at least one access point 18. After the flight, the stowage compartments 12 are provided at the access point 18 onboard the aircraft for unloading the hand luggage by the passengers before disembarking the aircraft.

In a fourth option, the stowage compartments 12 are provided at the access point 18 onboard the aircraft for loading the hand luggage by the passengers after embarking the aircraft but before getting seated. During flight, the hand luggage is only accessible via the at least one access point 18. After the flight, the stowage compartments 12 are provided at the access point 18 onboard the aircraft for unloading the hand luggage by the passengers before disembarking the aircraft.

In an option, the loading opening is configured to guide the stowage chain at least partly to the loading point located outside the cabin space.

In an example, the loading point is arranged outside the cabin space outside the aircraft.

In an example, the loading point is arranged outside the cabin space, but still inside the aircraft.

Fig. 7 shows basic steps of an example of a method 200 for handling hand luggage stowage onboard a vehicle. The method 200 comprises the following steps:
- In a first step 202, a stowage compartment 12 is arranged temporarily in an access point 18 which is provided adjacent to a stowage area 14. The stowage compartment 12 is configured to receive onboard hand luggage. Further, a plurality of the stowage compartments 12 is movably arranged in the stowage area 14. For moving the plurality of stowage compartments 12 inside the stowage area 14, a driving arrangement 16 is provided. Still further, the stowage compartments 12 are releasably connected to the driving arrangement 16.
- In a second step 204, access is provided to the stowage compartment 12 via an access opening 20.
- In a third step 206, a hand luggage is loaded or unloaded into or from the respective stowage compartment 12 by a passenger.

According to an aspect, an automated deposition of hand luggage in stowage compartments 12 in a paternoster-style is provided. In an example, several access points 18 are provided beneficial for faster boarding. As an example, a belt is mounted horizontally or is able to move around corners to make full use of space available for the hand luggage compartment. A shuttle of storage bins is designed in such a way that the storage bin can be disconnected from the belt when removed. The belt can then move independently, thus serving several access points 18 at the same time. A shuttle belt and drive might also comprise a mechanical picker arm. In an option, detaching the belt or at least a plurality of the stowage bins is provided and a pulling of the whole belt or chain of stowage bins out of a dedicated access point 18 is provided.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined, as long as the resulting embodiment falls within the scope of the claims, providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A system (10) for aircraft onboard stowage of hand luggage, the system comprising:
- a stowage area (14);
- a plurality of stowage compartments (12) movably arranged in the stowage area (14);
- a driving arrangement (16) for moving the plurality of stowage compartments inside the stowage area; and
- at least one access point (18) adjacent to the stowage area; wherein the access point is a location where the user is given access to the stowed onboard luggage;
wherein the stowage compartments are configured to receive onboard hand luggage; and wherein the stowage compartments are releasably connected to the driving arrangement;
wherein the stowage area is at least partly enclosed such that access by passengers is restricted to the at least one access point;
wherein an access opening (20) is provided; and
wherein the access point is configured to be arranged in an aircraft cabin to receive a selected one of the stowage compartments in order to provide access to the stowage compartment via the access opening (20) such that a user can load or unload the respective stowage compartment from a cabin space inside the aircraft;
wherein the driving arrangement comprises a circulating transport device (24) to which the stowage compartments are releasably connected; and
**characterized in that** the circulating transport device is arranged within a horizontal plane.

2. System according to claim 1, wherein the stowage compartments are provided as individual bins with a closable opening (30) to load or unload hand luggage.

3. System according to one of the preceding claims, wherein the transport device comprises connecting devices (40) to releasably hold the stowage compartments; and
wherein the connecting devices are mounted to the transport device in a regular pattern.

4. System according to one of the preceding claims, wherein the access point is provided next to the driving arrangement;
wherein the access point comprises a loading area (48) to receive the selected stowage compartment from the transport device such that the transport device can continue to move the further stowage compartments remaining releasably connected to the driving arrangement; and
wherein the stowage compartment that is temporarily arranged in the loading area is accessible by a user via the access opening.

5. System according to one of the preceding claims, wherein access to the onboard luggage by passengers during flight is provided via the at least one access point.

6. System according to one of the preceding claims, wherein the access opening of the at least one access point comprises a movable closure element (50) that is lockable in a closed position in an emergency case.

7. System according to one of the preceding claims, wherein a scanning unit (52) is provided at the access point to register luggage entered into the opening of the access point to a respective user and to monitor loaded and unloaded luggage.

8. System according to one of the preceding claims, wherein a guidance rail (54) is provided that keeps the stowage compartments in a consistent orientation during movement by the driving arrangement.

9. System according to one of the preceding claims, wherein the stowage area further comprises a loading opening (106);
wherein at least a part of the stowage compartments are couplable with each other to form a stowage chain (108);
wherein the loading opening is configured to guide at least a part of the stowage chain to a loading point (110) located outside the cabin space for loading and unloading of hand luggage into the stowage compartments before and/or after a flight mission; wherein the loading point relates to a location or area provided for loading and unloading the hand luggage from the stowage compartments.

10. An aircraft (100) comprising:
- a fuselage (102);
- a cabin area (104) within the fuselage; and
- at least one system (10) for onboard stowage of hand luggage according to one of the preceding claims;
wherein the at least one system for onboard stowage of hand luggage serves as stowage capacity for passengers seated within the cabin area; and
wherein the at least one access point is accessible by passengers from the cabin space.

11. Aircraft according to claim 10, wherein the driving arrangement follows an available stowage space within the aircraft fuselage; and
wherein the available stowage space is located in lateral cabin areas (26) that are non-suitable for passenger seating.

12. A method (200) for handling hand luggage stowage onboard an aircraft , the method comprising the following steps:
- arranging (202) a stowage compartment (12) temporarily in an access point (18) which is provided adjacent to a stowage area (14); wherein the stowage compartment is configured to receive onboard hand luggage; wherein a plurality of the stowage compartments is movably arranged in the stowage area; wherein for moving the plurality of stowage compartments inside the stowage area, a driving arrangement (16) is provided; wherein the stowage compartments are releasably connected to the driving arrangement; and wherein the access point is a location where the user is given access to the stowed onboard luggage;
wherein the stowage area is at least partly enclosed such that access by passengers is restricted to the at least one access point;
wherein an access opening (20) is provided; and
wherein the driving arrangement comprises a circulating transport device (24) to which the stowage compartments are releasably connected; and
wherein the circulating transport device is arranged within a horizontal plane
- providing (204) access to the stowage compartment via an access opening (20); and
- loading or unloading (206) a hand luggage into or from the respective stowage compartment by a passenger.

## Patentansprüche

1. System (10) zur bordseitigen Unterbringung von Handgepäck in einem Luftfahrzeug, wobei das System Folgendes umfasst:
- einen Unterbringungsbereich (14);
- eine Vielzahl von Unterbringungsfächern (12), die beweglich in dem Unterbringungsbereich (14) angeordnet sind;
- eine Antriebsanordnung (16) zum Bewegen der Vielzahl von Unterbringungsfächern innerhalb des Unterbringungsbereichs; und
- mindestens einen Zugangspunkt (18) angrenzend an den Unterbringungsbereich; wobei der Zugangspunkt eine Stelle ist, an der dem Benutzer Zugang zu dem untergebrachten Bordgepäck gewährt wird;
wobei die Unterbringungsfächer dazu eingerichtet sind, Bordhandgepäck aufzunehmen; und wobei die Unterbringungsfächer lösbar mit der Antriebsanordnung verbunden sind;
wobei der Unterbringungsbereich zumindest teilweise umschlossen ist, sodass der Zugang durch Passagiere auf den mindestens einen Zugangspunkt beschränkt ist; wobei eine Zugangsöffnung (20) vorgesehen ist; und
wobei der Zugangspunkt dazu eingerichtet ist, in einer Luftfahrzeugkabine angeordnet zu sein, um ein ausgewähltes der Unterbringungsfächer aufzunehmen, um einen Zugang zu dem Unterbringungsfach über die Zugangsöffnung (20) bereitzustellen, sodass ein Benutzer das jeweilige Unterbringungsfach von einem Kabinenraum innerhalb des Luftfahrzeugs aus beladen oder entladen kann;
wobei die Antriebsanordnung eine umlaufende Transportvorrichtung (24) umfasst, mit der die Unterbringungsfächer lösbar verbunden sind; und
**dadurch gekennzeichnet, dass** die umlaufende Transportvorrichtung innerhalb einer horizontalen Ebene angeordnet ist.

2. System nach Anspruch 1, wobei die Unterbringungsfächer als einzelne Behälter mit einer verschließbaren Öffnung (30) zum Beladen oder Entladen von Handgepäck vorgesehen sind.

3. System nach einem der vorhergehenden Ansprüche, wobei die Transportvorrichtung Verbindungsvorrichtungen (40) umfasst, um die Unterbringungsfächer lösbar zu halten; und wobei die Verbindungsvorrichtungen in einem regelmäßigen Muster an der Transportvorrichtung angebracht sind.

4. System nach einem der vorhergehenden Ansprüche, wobei der Zugangspunkt neben der Antriebsanordnung vorgesehen ist; wobei der Zugangspunkt einen Ladebereich (48) umfasst, um das ausgewählte Unterbringungsfach von der Transportvorrichtung aufzunehmen, sodass die Transportvorrichtung fortfahren kann, die weiteren Unterbringungsfächer zu bewegen, die lösbar mit der Antriebsanordnung verbunden bleiben; und wobei das Unterbringungsfach, das vorübergehend in dem Ladebereich angeordnet ist, für einen Benutzer über die Zugangsöffnung zugänglich ist.

5. System nach einem der vorhergehenden Ansprüche, wobei ein Zugang zu dem Bordgepäck durch Passagiere während des Fluges über den mindestens einen Zugangspunkt bereitgestellt wird.

6. System nach einem der vorhergehenden Ansprüche, wobei die Zugangsöffnung des mindestens einen Zugangspunkts ein bewegliches Verschlusselement (50) umfasst, das in einem Notfall in einer geschlossenen Position verriegelbar ist.

7. System nach einem der vorhergehenden Ansprüche, wobei eine Scaneinheit (52) an dem Zugangspunkt vorgesehen ist, um in die Öffnung des Zugangspunkts eingebrachtes Gepäck für einen jeweiligen Benutzer zu registrieren und um beladenes und entladenes Gepäck zu überwachen.

8. System nach einem der vorhergehenden Ansprüche, wobei eine Führungsschiene (54) vorgesehen ist, die die Unterbringungsfächer während der Bewegung durch die Antriebsanordnung in einer gleichbleibenden Ausrichtung hält.

9. System nach einem der vorhergehenden Ansprüche, wobei der Unterbringungsbereich ferner eine Ladeöffnung (106) umfasst; wobei zumindest ein Teil der Unterbringungsfächer miteinander koppelbar ist, um eine Unterbringungskette (108) zu bilden; wobei die Ladeöffnung dazu eingerichtet ist, zumindest einen Teil der Unterbringungskette zu einem Ladepunkt (110) zu führen, der sich außerhalb des Kabinenraums befindet, um Handgepäck vor und/oder nach einem Flugeinsatz in die Unterbringungsfächer zu beladen und daraus zu entladen; wobei sich der Ladepunkt auf eine Stelle oder einen Bereich bezieht, die bzw. der zum Beladen und Entladen des Handgepäcks aus den Unterbringungsfächern vorgesehen ist.

10. Luftfahrzeug (100), umfassend:
- einen Rumpf (102);
• einen Kabinenbereich (104) innerhalb des Rumpfes; und
• mindestens ein System (10) zur bordseitigen Unterbringung von Handgepäck nach einem der vorhergehenden Ansprüche;
wobei das mindestens eine System zur bordseitigen Unterbringung von Handgepäck als Unterbringungskapazität für Passagiere dient, die innerhalb des Kabinenbereichs sitzen; und
wobei der mindestens eine Zugangspunkt für Passagiere vom Kabinenraum aus zugänglich ist.

11. Luftfahrzeug nach Anspruch 10, wobei die Antriebsanordnung einem verfügbaren Unterbringungsraum innerhalb des Luftfahrzeugrumpfes folgt; und wobei sich der verfügbare Unterbringungsraum in seitlichen Kabinenbereichen (26) befindet, die für Passagiersitze ungeeignet sind.

12. Verfahren (200) zur Handhabung der Handgepäckunterbringung an Bord eines Luftfahrzeugs, wobei das Verfahren die folgenden Schritte umfasst:
- vorübergehendes Anordnen (202) eines Unterbringungsfachs (12) in einem Zugangspunkt (18), der angrenzend an einen Unterbringungsbereich (14) vorgesehen ist; wobei das Unterbringungsfach dazu eingerichtet ist, Bordhandgepäck aufzunehmen; wobei eine Vielzahl der Unterbringungsfächer beweglich in dem Unterbringungsbereich angeordnet ist; wobei zum Bewegen der Vielzahl von Unterbringungsfächern innerhalb des Unterbringungsbereichs eine Antriebsanordnung (16) vorgesehen ist; wobei die Unterbringungsfächer lösbar mit der Antriebsanordnung verbunden sind; und wobei der Zugangspunkt eine Stelle ist, an der dem Benutzer Zugang zu dem untergebrachten Bordgepäck gewährt wird;
wobei der Unterbringungsbereich zumindest teilweise umschlossen ist, sodass der Zugang durch Passagiere auf den mindestens einen Zugangspunkt beschränkt ist;
wobei eine Zugangsöffnung (20) vorgesehen ist; und
wobei die Antriebsanordnung eine umlaufende Transportvorrichtung (24) umfasst, mit der die Unterbringungsfächer lösbar verbunden sind; und
wobei die umlaufende Transportvorrichtung innerhalb einer horizontalen Ebene angeordnet ist;
- Bereitstellen (204) eines Zugangs zu dem Unterbringungsfach über eine Zugangsöffnung (20); und
- Beladen oder Entladen (206) eines Handgepäcks in das oder aus dem jeweilige(n) Unterbringungsfach durch einen Passagier.

## Revendications

1. Système (10) de rangement à bord d'un aéronef de bagages à main, le système comprenant :
- une zone de rangement (14) ;
- une pluralité de compartiments de rangement (12) agencés de manière mobile dans la zone de rangement (14) ;
- un agencement d'entraînement (16) pour déplacer la pluralité de compartiments de rangement à l'intérieur de la zone de rangement ; et
- au moins un point d'accès (18) adjacent à la zone de rangement ; dans lequel le point d'accès est un emplacement où l'utilisateur se voit donner accès aux bagages de bord rangés ;
dans lequel les compartiments de rangement sont configurés pour recevoir des bagages à main de bord ; et dans lequel les compartiments de rangement sont reliés de manière amovible à l'agencement d'entraînement ;
dans lequel la zone de rangement est au moins en partie fermée de sorte que l'accès par des passagers soit limité à l'au moins un point d'accès ;
dans lequel une ouverture d'accès (20) est prévue ; et
dans lequel le point d'accès est configuré pour être agencé dans une cabine d'aéronef afin de recevoir un compartiment sélectionné parmi les compartiments de rangement dans le but de fournir un accès au compartiment de rangement via l'ouverture d'accès (20) de sorte qu'un utilisateur puisse charger ou décharger le compartiment de rangement respectif depuis un espace de cabine à l'intérieur de l'aéronef ;
dans lequel l'agencement d'entraînement comprend un dispositif de transport circulant (24) auquel les compartiments de rangement sont reliés de manière amovible ; et
**caractérisé en ce que** le dispositif de transport circulant est agencé dans un plan horizontal.

2. Système selon la revendication 1, dans lequel les compartiments de rangement sont prévus sous forme de bacs individuels dotés d'une ouverture refermable (30) pour charger ou décharger des bagages à main.

3. Système selon l'une des revendications précédentes, dans lequel le dispositif de transport comprend des dispositifs de liaison (40) pour maintenir de manière amovible les compartiments de rangement ; et dans lequel les dispositifs de liaison sont montés sur le dispositif de transport selon un motif régulier.

4. Système selon l'une des revendications précédentes, dans lequel le point d'accès est prévu à côté de l'agencement d'entraînement ; dans lequel le point d'accès comprend une zone de chargement (48) pour recevoir le compartiment de rangement sélectionné depuis le dispositif de transport de sorte que le dispositif de transport puisse continuer à déplacer les autres compartiments de rangement restant reliés de manière amovible à l'agencement d'entraînement ; et dans lequel le compartiment de rangement qui est temporairement agencé dans la zone de chargement est accessible par un utilisateur via l'ouverture d'accès.

5. Système selon l'une des revendications précédentes, dans lequel un accès aux bagages de bord par des passagers pendant le vol est fourni via l'au moins un point d'accès.

6. Système selon l'une des revendications précédentes, dans lequel l'ouverture d'accès de l'au moins un point d'accès comprend un élément de fermeture mobile (50) qui peut être verrouillé dans une position fermée en cas d'urgence.

7. Système selon l'une des revendications précédentes, dans lequel une unité de balayage (52) est prévue au niveau du point d'accès pour enregistrer des bagages introduits dans l'ouverture du point d'accès pour un utilisateur respectif et pour surveiller des bagages chargés et déchargés.

8. Système selon l'une des revendications précédentes, dans lequel un rail de guidage (54) est prévu qui maintient les compartiments de rangement dans une orientation cohérente pendant le mouvement par l'agencement d'entraînement.

9. Système selon l'une des revendications précédentes, dans lequel la zone de rangement comprend en outre une ouverture de chargement (106) ; dans lequel au moins une partie des compartiments de rangement peuvent être couplés entre eux pour former une chaîne de rangement (108) ; dans lequel l'ouverture de chargement est configurée pour guider au moins une partie de la chaîne de rangement vers un point de chargement (110) situé à l'extérieur de l'espace de cabine pour le chargement et le déchargement de bagages à main dans les compartiments de rangement avant et/ou après une mission de vol ; dans lequel le point de chargement se rapporte à un emplacement ou une zone prévu(e) pour le chargement et le déchargement des bagages à main depuis les compartiments de rangement.

10. Aéronef (100) comprenant :
- un fuselage (102) ;
- une zone de cabine (104) à l'intérieur du fuselage ; et
- au moins un système (10) de rangement à bord de bagages à main selon l'une des revendications précédentes ;
dans lequel l'au moins un système de rangement à bord de bagages à main sert de capacité de rangement pour des passagers assis à l'intérieur de la zone de cabine ; et
dans lequel l'au moins un point d'accès est accessible par des passagers depuis l'espace de cabine.

11. Aéronef selon la revendication 10, dans lequel l'agencement d'entraînement suit un espace de rangement disponible à l'intérieur du fuselage d'aéronef ; et dans lequel l'espace de rangement disponible est situé dans des zones de cabine latérales (26) qui ne sont pas appropriées pour des sièges de passagers.

12. Procédé (200) de manipulation du rangement de bagages à main à bord d'un aéronef, le procédé comprenant les étapes suivantes :
- agencer (202) un compartiment de rangement (12) temporairement dans un point d'accès (18) qui est prévu adjacent à une zone de rangement (14) ; dans lequel le compartiment de rangement est configuré pour recevoir des bagages à main de bord ; dans lequel une pluralité des compartiments de rangement est agencée de manière mobile dans la zone de rangement ; dans lequel pour déplacer la pluralité de compartiments de rangement à l'intérieur de la zone de rangement, un agencement d'entraînement (16) est prévu ; dans lequel les compartiments de rangement sont reliés de manière amovible à l'agencement d'entraînement ; et dans lequel le point d'accès est un emplacement où l'utilisateur se voit donner accès aux bagages de bord rangés ;
dans lequel la zone de rangement est au moins en partie fermée de sorte que l'accès par des passagers soit limité à l'au moins un point d'accès ;
dans lequel une ouverture d'accès (20) est prévue ; et
dans lequel l'agencement d'entraînement comprend un dispositif de transport circulant (24) auquel les compartiments de rangement sont reliés de manière amovible ; et
dans lequel le dispositif de transport circulant est agencé dans un plan horizontal ;
- fournir (204) un accès au compartiment de rangement via une ouverture d'accès (20) ; et
- charger ou décharger (206) un bagage à main dans ou depuis le compartiment de rangement respectif par un passager.
